Europäisches Patentamt

European Patent Office

Office européen des brevets

(11) Veröffentlichungsnummer: **0 033 378**
**B1**

(12) **EUROPÄISCHE PATENTSCHRIFT**

(45) Veröffentlichungstag der Patentschrift: **28.12.83**

(21) Anmeldenummer: **80107771.0**

(22) Anmeldetag: **10.12.80**

(51) Int. Cl.³: **G 01 B 7/12**, G 01 B 7/28,
F 41 C 21/20

(54) Rohrinnendurchmessermessgerät.

(30) Priorität: **31.01.80 DE 3003415**

(43) Veröffentlichungstag der Anmeldung:
**12.08.81 Patentblatt 81/32**

(45) Bekanntmachung des Hinweises auf die Patenterteilung:
**28.12.83 Patentblatt 83/52**

(84) Benannte Vertragsstaaten:
**CH GB LI NL SE**

(56) Entgegenhaltungen:
**DE - B - 1 251 014
FR - A - 1 591 323
FR - A - 2 201 549
FR - A - 2 235 351
GB - A - 1 263 717
US - A - 1 406 350
US - A - 3 150 450
US - A - 4 109 386**

(73) Patentinhaber: **Rheinmetall GmbH
Ulmenstrasse 125 Postfach 6609
D-4000 Düsseldorf (DE)**

(72) Erfinder: **Böder, Dieter, Dipl.-Ing.
Joachimstrasse 63
D-4000 Düsseldorf 11 (DE)**
Erfinder: **Wiemers, Karl-Josef, Ing.(grad)
Hattinger Strasse 99
D-4630 Bochum 1 (DE)**

(74) Vertreter: **Behrens, Ralf Holger, Dipl.-Phys.
Ulmenstrasse 125 Postfach 6609
D-4000 Düsseldorf (DE)**

# 0 033 378

## Rohrinnendurchmessermeßgerät

Die Erfindung betrifft ein Rohrinnendurchmessermeßgerät, das aus einem mit Paßteilen gleitbar an der Rohrinnenwand des zu messenden Rohres anliegenden Meßschlitten besteht, der über ein mit einem Antrieb verbundenes Teil in Längsrichtung des Rohres verschiebbar ist und der beim Meßvorgang über seine Außenwand hinausragende, mit ihrem freien Ende federnd an der Innenwand des Rohres anliegende Tastfühler aufweist, von denen Meßwerte auf einem Meßwertgeber übertragbar sind.

Mit einem derartigen z.B. aus der US—A—3 150 450 bekannten Gerät ist ein schnelles und vollständiges Vermessen der ganzen Innenfläche eines Rohres Millimeter für Millimeter bzw. in Abständen von 2 bis 3 mm durch lediglich wenige Durchgänge oder nur einen Durchgang eines Meßschlittens durch das Rohr nicht möglich, da nur eine geringe Zahl von Tastfingern vorhanden ist. Außerdem läßt sich der Meßschlitten nicht drehen. Es kann auch die genaue Lage einer Auswaschung nicht ermittelt werden, da je zwei einander gegenüberliegende Tastfühler miteinander gekoppelt sind.

Aufgabe der Erfindung ist es daher, insbesondere um Verschließstellen und Auswaschungen in Geschützrohren festzustellen, eine Vollautomatisierte, fehlerfreie, vollständige Ausmessung der gesamten Innenfläche eines Rohres in kürzester Zeit zu ermöglichen. Es soll eine selbsttätige Rohrvermessung nach einem gespeicherten Programm möglich sein, um den Zustand des Rohres zu dokumentieren und danach eine Aussage über Treffwahrscheinlichkeit und Belastbarkeit des Rohres zu treffen.

Dabei soll nach dem Meßvorgang jeweils eine Schutzhülle selbsttätig über die Tastfühler führbar sein und es soll die Vermessung jeweils durch Ansetzen eines Startrohres vom vorderen bis zum hinteren Ende des Rohres möglich sein.

Die zur Lösung der gestellten Aufgabe wesentlichen Merkmale der Erfindung sind im Patentanspruch 1 genannt. Die Unteransprüche nennen Ausführungsarten der Erfindung.

An den Meßwertgeber kann eine elektronische Meßdatenverarbeitungseinheit und eine Registriereinrichtung angeschlossen sein, so daß kurz nach Abschluß der Messung nur abhängig von der Auflösung der Datenverarbeitung deren Ergebnis vorliegt.

Nach einer Ausführungsform der Erfindung ist der Meßschlitten ein mit dem Schrittantrieb verbundenes, nur in Längsrichtung des Rohres verschiebbares Teil, das über Spannbecken in seiner Lage im Rohr festlegbar ist, und das den Drehantrieb für ein die Tastfühler aufnehmendes, im Rohr drehbares und längsverschiebbares Teil des Meßschlittens aufweist. Durch diese Trennung der jeweils mit eigenen Paßringen im zu messenden Rohr zu lagernden Teile des Meßschlittens werden die Messung störende Einflüsse von dem die Antriebe aufnehmenden Teil auf das die Tastfühler aufnehmende Teil vermieden. Diese vollständige Trennung ist dadurch erreicht, daß ein den Schrittantrieb aufnehmender Support vorgesehen ist, der mit Paßringen an der Innenwand des Rohres anliegt, in dessen Längsrichtung verschiebbar ist und mit Spannbacken in seiner Lage im Rohr festlegbar ist. Die Verbindung dieses Supports mit dem Meßschlitten erfolgt durch eine im Support über ein Transportritzel vom Schrittantrieb in Rohrlängsrichtung verschiebbare Zahnstange. Dadurch wird eine Meßbetrieb in der Weise möglich, daß nach Festlegen des Meßschlittens durch die Spannbacken im Rohr der Support zunächst bis an das Äußere freie Ende der Zahnstange vorfährt, danach die Spannbacken des Supports festgelegt, die des Meßschlittens gelöst werden und dann beim Messen der Meßschlitten schrittweise bis an den Support herangezogen wird. Um die Tastfühler beim Einschieben des Gerätes in das Rohr und auch bei Verschiebungen im Rohr zwischen den Meßzeiten vor Schäden zu schützen, ist die mit Hubantrieb über die Tastfühler am drehbaren Teil des Meßschlittens zu schiebende Schutzhülle vorgesehen.

Um Meßschlitten und Support auch in Rohren mit tieferen Innenwandlöchern, in die die Spannbacken sich hineinlegen können, jeweils zentrisch im Rohr zu halten, werden erfindungsgemäß die Spannbacken von im Meßschlitten bzw. im Support radial nach innen ragenden, unter nach innen gerichtetem Federdruck stehenden Bolzen gehalten, deren inneres freies Ende auf einem axial in Längsrichtung von Meßschlitten bzw. Support verschiebbaren, an einem Kugelkörper gehaltenem Kegel anliegen. Der Kegel wird durch eine Hubstange in seiner Lage gehalten.

Durch die Lagerung des Kegels mit einer Kugelfläche pendelt sich der Kegel, je nachdem, wie weit die Bolzen nach außen gedrückt werden, aus der axialen Richtung heraus. Dadurch erfolgt eine selbsttätige Zentrierung der Bolzen und die Andruckkraft auf die Spannbacken ist dann stets gleich.

Um das Rohr über seine ganze Länge vermessen zu können, ist erfindungsgemäß ein an jedes Ende des zu messenden Rohres ansetzbares Startrohr gleichen Innendurchmessers wie das zu messende Rohr vorgesehen. Beim Messen im Bereich des einen Rohrendes ist dann der Support im Startrohr gelagert. Dieses Startrohr kann eine auf das eine Rohrende aufzuschiebende Führungshülse sein. Im Falle eines sich an einer Stelle erweiternden Rohres und eines sich anschließenden erweiterten Raumes, also z.B. bei einem Geschützrohr des Laderaumes und eines konischen Übergangsstückes zum Geschützrohr, kann das Startrohr außen den Durchmesser des erweiterten Raumes haben und in diesem mit Abstand von dem eigentlichen zu messenden Rohr gehalten sein. Dadurch ergibt sich die Möglichkeit, auch die Rohrerweiterung zu messen. In dem Falle ist der Meßschlitten mit einem Ende im Startrohr, mit dem anderen Ende bereits im zu messenden Rohr mit seinen Paßringen gehalten.

Um die Funktionsabläufe beim Meßvorgang zu steuern, werden Kontaktschalter zwischen beiden Enden der Zahnstange und dem Support an der Zahnstange bzw. am Support vorgesehen. Es kann auch ein Kontacktschalter am Support oder am freien Ende der Zahnstange vorgesehen sein, der mit einem Anschlag in dem als Rohrverlängerung angeordneten vorderen Startrohr zusammenwirkt. Weitere Kontaktschalter können im drehbaren und im längsverschiebbaren Teil des Meßschlittens vorgesehen sein.

Um mit möglichst wenig Meßschritten auszukommen, ist eine besonders raumsparende Anordnung der Tastfühler vorgesehen. Sie sind in Längsschlitzen einer Trommel des Führungskörpers, z.B. des Meßschlittens, einseitig schwenkbar gelagerte, schmale Bügel, von denen jeder nach außen in einen Tastsift ausläuft und an der Rückseite mit einem mit einem Dehnungsmeßstreifen ausgerüsteten Federblech verbunden ist. Aus dem Widerstand des Dehnungsmeßstreifens kann dann abhängig von der Federbelastung in einer Auswerteinheit die Tiefe des Eintauchens des Taststiftes in eine Vertiefung der Rohrinnenwand errechnet werden. Bei dieser raumsparenden Anordnung lassen sich 90 Bügel mit Taststiften am Umfang der Trommel anbringen. Wenn eine Vermessung des Rohres mit Abständen der Meßstellen von nur einem Millimeter in Längs- und im Umfangsrichtung erfolgen soll, kann dann der Meßbetrieb so erfolgen, daß zunächst der Meßschlitten einmal in Längsrichtung durch einen Meßbereich gefahren, wird, daß er dann zurückgefahren und die Meßstrecke jeweils nach Drehung der Tastfühler um einen programmierten Winkel noch mehrmals durchfahren wird. Das programmierte Durchfahren der Meßbereiche und das Vorfahren von Meßbereich zu Meßbereich kann selbsttätig erfolgen.

Um die Messungen unabhängig von auftretenden Spannungen, z.B. beim Verhaken des Bügels im Rohr, zu machen, sind nach einem weiteren Merkmal der Erfindung Verbindungsstifte zwischen den Bügeln und den Federblechen angeordnet. Dadurch wird erreicht, daß mittels der Dehnungsmeßstreifen über die Biegespannung des Federblechs nur die jeweilige Tiefe des Loches in der Rohrwand angezeigt wird, auch wenn der Bügel beim Festhaken in einem Loch auf Zug beansprucht oder in einem Loch verdrillt wird. Für den Fall, daß ein Bügel abbricht, kann er leicht und schnell durch einen neuen Bügel ersetzt werden. Bei Bruch des Bügels wird kein Meßsignal ausgelöst. Das Federblech und der Dehnmeßstreifen werden davon nicht berührt, da sie geschützt in der Trommel liegen. Sie können weiter verwendet werden.

Gemäß einer Weiterbildung der Erfindung weist der Meßschlitten eine Zentriereinrichtung auf, wobei der Meßschlitten aus der die Zentriereinrichtung tragenden Schutzhülse und der in der Schutzhülse nahezu spielfrei, längsverschieblich geführten, die Tastfühler tragenden Innenhülse besteht, die über im Bereich der beiden Enden des zu messenden Rohres angeordneten, gegensinnig zu betreibenden Drehfeldmotoren mit Seiltrommeln über Seile in Längsrichtung des Rohres von Meßstellung zu Meßstellung verschiebbar ist.

Dieser einteilige Führungskörper hat den Vorteil, daß die Messung durch einmaliges Durchfahren des zu messenden Rohres von der Laderaumseite zur Mündung hin erfolgen kann. Der bei dieser Ausführungsform vorgesehene Seilzug-Drehfeldmotor—Vorschubantrieb gewährleistet mit auf dem Umfang verteilten 90—100 Meßfühlern bei kontinuierlichem, langsamen Vorschub eine ausreichende Meßgenauigkeit. Dabei wirkt sich vorteilhaft aus, daß eine evtl. Störstelle, z.B. eine Erosionsfurche in der Oberfläche in ihrer axialen und tangentialen Ausdehnung sowie ihrer Tiefe besonders genau (Länge:$\pm 1$ mm, Breite:$\pm 2$ mm und Tiefe: $\pm 0,2$ mm) erfaßt wird, während es ausreicht, den Abstand zur Rohrmündung mit einer Genauigkeit von$\pm 3$ mm zu messen. Die besonders wichtige Messung der Erosionstiefe wird dadurch erleichtert, daß mindestens einer der an einer Erosionsfurchenflanke aufliegenden Meßfühler infolge seiner Federspannung das Bestreben hat, sich um den Bruchteil eines Millimeters seitlich zu verbiegen, so daß immer der tiefste Punkt der Erosionsfurche abgetastet wird, also auch dann, wenn der Meßfühler zuvor nicht ganz genau über den tiefsten Punkt der Störung gezogen wird. Es kann daher auf eine gewollte Drehung des Führungskörpers verzichtet werden. Eine ungewollte Drehung des Führungskörpers ist für die Messung unerheblich, weil man bei einer Wiederholungsmessung die Stelle größter Rohrschäden in jedem Falle wiederfindet, ggf. auf einer anderen Meßspur. Eine Zuordnung der Meßspur zur Vertikalebene durch die Rohrseelenachse ist bei Bedarf durch eine und der Innenhülse befestigte Meßlibelle möglich, deren Signale gleichzeitig mit den übrigen Meßwerten registriert werden. Für die Zentrierung des Führungskörpers ist es erfindungsgemäß bei der vorstehend angegebenen Ausführungsform ausreichend, wenn mindestens zwei mit axialem Abstand voneinander, außen an der Schutzhülse in Umfangsrichtung ununterbrochen oder unterbrochen angebrachte Bürstensätze, bestehend aus mindestens je 3 Bürstenkränzen mit abgestuft unterschiedlichen Außendurchmessern, vorhanden sind, deren geringster kleiner und alle übrigen größer als der Kaliberdurchmesser des zu messenden Rohres und deren Stufenhöhe kleiner als die Meßtiefentoleranz ist.

Diese Bürstenzentrierung hat den Vorteil, daß sich die Bürsten nicht in örtliche Vertiefungen der Rohrinnenwand hineinlegen, sondern sich davon abheben.

Bei einer bevorzugten Ausführungsform der Erfindung wird erreicht, daß sich die Tastelemente beim Meßvorgang selbsttätig aus der Schutzhülse ausfahren und nach dem Meßvorgang selbsttätig wieder in die Schutzhülse eingefahren werden. Das wird dadurch erreicht, daß das vom Drehfeldmotor am hinteren Rohrende kommende Seil mit einer hinteren Stirnwand der Innenhülse verbunden ist, während das vom Drehfeldmotor am vorderen Ende des Rohres kommende Seil mit einem in einer vorderen Stirnwand der Schutzhülse befestigten Bolzen verbunden ist, der gleitbar durch eine vordere Stirnwand der Innenhülse geführt ist, und daß eine Zugfeder zwischen dem durch die vordere Stirnwand der Innenhülse ragenden Bolzen und der hinteren Stirnwand der Innenhülse angeordnet ist.

Um die Messung bis zur Rohrmündung durchführen zu können, kann bei dieser Ausführungsform ein auf die Rohrmündung aufklemmbares, topfartiges Startrohr, dessen Länge der Länge des Führungskörpers beim Meßvorgang entspricht, vorhanden sein. Dieses topfartige Startrohr kann auch als Behälter zur Aufnahme des Führungskörpers zu seiner Aufbewahrung oder Weiterbeförderung zum nächsten zu messenden Rohr dienen. Bei der vorstehend beschriebenen Ausführungsform können erfindungsgemäß die Tastfühler derart vereinfacht sein, daß als Tastfühler das an der zu messenden Fläche anliegende, freie Ende eines an seinem anderen Ende an der Innenhülse festen Federbleches, das mit Dehnmeßstreifen ausgerüstet ist, dient. Es werden dann beim Meßvorgang die Wegänderungen des Tastfühlers von den Dehnmeßstreifen als elektrische Signale auf einen Meßwertgeber übertragen. Um Bei dieser Form des Tastfühlers Fehlmessungen bei einem Verbiegen des Federbleches, z.B. beim Verhaken in Erosionsfurchen des zu messenden Rohres, weitgehend zu vermeiden, kann an dem genannten ersten Federblech an dessen Rückseite, also an der von der zu messenden Fläche abgewandten Seite, punktförmig das freie Ende eines zweiten, ebenfalls an seinem anderen Ende an der Innenhülse festen Federbleches anliegen. Dann ist nur dieses zweite Federblech Dehnmeßstreifen ausgerüstet.

Bei allen Ausführungsformen der Erfindung können die Dehnmeßstreifen auf die Federbleche aufgeklebt oder aufgedampft sein. Eine Verdoppelung des Meßsignals kann dadurch erreicht werden, daß je ein Dehnmeßstreifen auf der Ober- und auf der Unterseite des Federbleches angebracht ist. Um die Wirkung einer Verdrehung des Federbleches, z.B. beim Verhaken in einer Erosionsfurche, weitgehend auszuschalten, kann der oder können die Dehnmeßstreifen unter einem Winkel zur Längsrichtung des Federbleches auf dem Federblech angeordnet sein. Das Verbiegen der Federbleche durch seitliches Wegdrücken kann dadurch eingeschränkt werden, daß zwischen den Federblechen radial nach außen weisende, ebene Zwischenbleche am Außenumfang der Innenhülse angeordnet sind.

Die Federbleche können Blattfedern sein. Sie können am Führungskörper, dem rohrförmigen Meßschlitten oder der Innenhülse, eingeklemmt oder sonstwie befestigt sein. Sie können aber auch aus dem Material des Meßschlittens oder der Innenhülse herausgebogen sein.

Die Anwendung der beschriebenen Tastfühler ist nicht auf die beschriebenen Ausführungsformen von Führungskörpern beschränkt. Sie können allgemein als Wegaufnehmer für Längenmeßgeräte, z.B. an einem Meßdorn zum Messen von Innendurchmessern von Werkstückbohrungen, eingesetzt sein.

Die Zeichnung zeigt Ausführungsformen des neuen Meßgerätes in

Fig. 1—6 eine erste Ausführungsform, und zwar in

Figur 1 in Ansicht und teilweise im Schnitt eingesetzt in ein zu messendes Rohr, in

Figur 2 und 3 in zueinander senkrechten Schnitten die Klemmvorrrichtung für die Spannbacken, in

Figur 4 und 5 im Schnitt die Tastfühleranordnung und

Figur 6 schematisch einen Schnitt durch die Trommel im Bereich der Tastfühler. Figur 7 bis 9 zeigen im lotrechten Schnitt Einzelheiten einer anderen Ausführungsform des neuen Meßgerätes und zwar in

Figur 7 die Anordnung der Federbleche, in

Figur 8 die Zentriereinrichtung mit Bürsten und in

Figur 9 die Ausbildung des Führungskörpers.

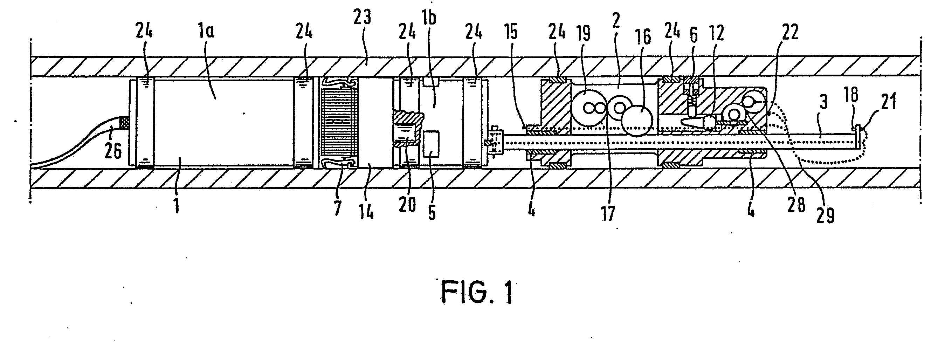

Wie Figur 1 zeigt, ist in dem zu messenden Rohr 23 über Paßringe 24 der Meßschlitten 1 mit drehbarem Teil 1a und längsverschiebbarem Teil 1b sowie der Support 2 gelagert. Beide sind über die in Drehmomentenkugelbüchsen 4 im Support 2 gelagerte hohle Zahnstange 3 miteinander verbunden. Die Zahnstange weist für diese Verbindung einen Vierkant auf, der in den Meßschlitten gesteckt und durch einen Keil gesichert ist. Dabei wird selbsttätig das durch die Zahnstange geführte Steuerkabel 29 für den Support 2 an den Meßschlitten 1 angeschlossen. Durch die Spannbacken 5 kann der Meßschlitten, durch die Spannbacken 6 der Support im Rohr 23 in seiner Lage festgelegt werden. Am durch den Drehantrieb 20 drehbaren Teil 1a des Meßschlittens 1 befinden sich die Tastfühler 7, über die mit einer nicht dargestellten Hubanordnung die Schutzhülle 14 geschoben werden kann. Mit 15, 18 und 21, 22 sind Kontakte für Sicherheits- und Steuerfunktionen gekennzeichnet. Das Transportritzel 16 wird vom Schrittantrieb 19 über das Getriebe 17 bewegt. Ein Hubantrieb 28 dient zum Vordrücken des Kegels 12 zum Arretieren der Spannbacken 6.

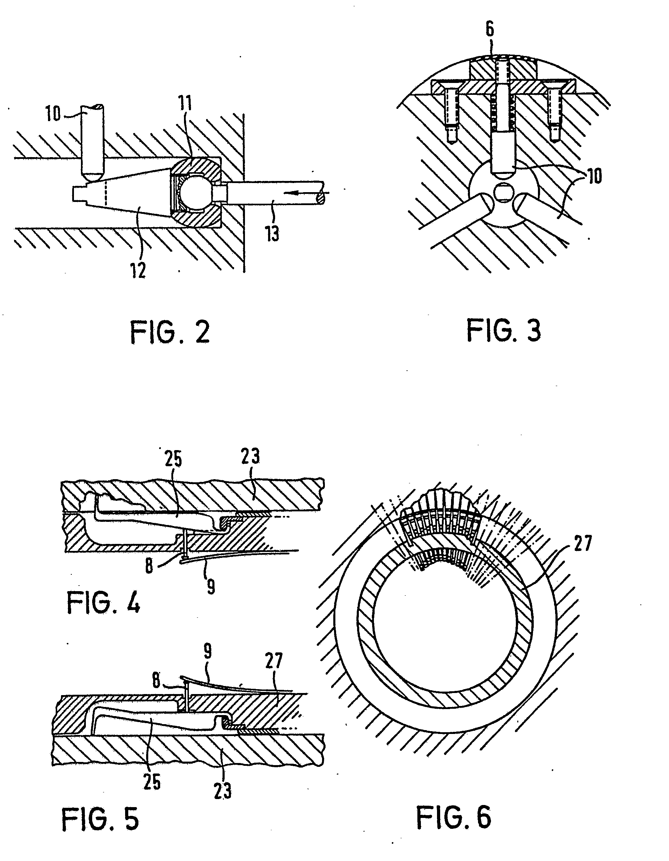

Figur 2 und 3 zeigen von jeweils drei Spannbacken kommende Bolzen 10, die in Kontakt mit dem Kegel 12 stehen, der von dem Kugelkörper 11 gehalten ist. In den Kugelkörper 11 ragt selbst wieder in eine Kugel auslaufend die Hubstange 13, die von dem Hubantrieb 28 in ihrer Lage gehalten wird.

Nach Figur 4 bis 6 sind um die Trommel 27 herum als Tastfühler 90 Bügel 25, die über die Stifte 8 mit den Federblechen 9 verbunden sind, angeordnet.

**0 033 378**

Der Meßvorgang kann selbsttätig durch ein gespeichertes Programm ablaufen. Nach Einschieben des Gerätes von einer Rohrseite her in das Rohr 23 bis zu einem Anschlag im Startrohr und nach Vorfahren des Supports 2 gegen den Meßschlitten 1, welche Lage durch das Signal 15 angezeigt werden kann, ist das Gerät meßbereit. Es arbeitet sich dann nach dem Program selbsttätig durch das zu messende Rohr.

Zuerst werden die Spannbacken 5 des Meßschlittens 1 angezogen. Dann wird der Support 2 vom Transportritzel 16 bis zum Kontakt 18 nach rechts gefahren. Danach werden die Spannbacken 6 des Supports 2 angezogen und die Spannbacken 5 des Meßschlittens 1 gelöst sowie die Schutzhülle 14 nach rechts verschoben, so daß die Tastfühler 7 mit der Rohrinnenwand in Berührung kommen. Es findet die erste Messung statt. Danach wird taktweise mit 1 mm Vorschub der Meßschlitten nach rechts gezogen, bis er wieder mit dem Support in Kontakt kommt. Nach jedem Takt werden jeweils die 90 Meßfühler 7 abgefragt und die Meßwerte in einer Auswerteeinheit gespeichert.

Um den gleichen Meßbereich nach Drehung der Tastfühler um einen vorprogrammierten Winkel noch einmal durchlaufen zu können, wird die Schutzhülle zum Rücklauf des Meßschlittens wieder über die Tastfühler geschoben, das drehbare Teil des Meßschlittens wird dann um den programmierten Winkel durch den Drehantrieb 20 weiter gedreht. Der Meßschlitten wird wieder in seine Ausgangslage zurückgefahren. Dann erfolgt der gleiche Meßvorgang ggf. nach jeweiliger Drehung der Tastfühler mehrmals nacheinander. Darauf kann nach Lösen der Spannbacken des Supports und nach Anziehen der Spannbacken des Meßschlittens ein nächster Meßbereich angefahren werden. Über das Meß- und Steuerkabel 26 werden einerseits vom Programm alle Impulse für den Antrieb der Motoren und für die Festlegung der Spannbacken geleitet, andererseits werden über dieses Kabel die Impulse der Meßwerte in die Auswerteeinheit geleitet.

Die jeweilige Lage von Support 2 bzw. Meßschlitten 1 wird über die Anzahl der Meßschritte auf der Datenverarbeitungseinheit angezeigt. Die Kontaktschalter sind im Meßprogramm integriert und steuern die Funktionsabläufe z.B. folgendermaßen:

Der Kontaktschalter 21 außen an der Zahnstange 3 bzw. 22 rechts außen am Support 2 beendet den Meßvorgang.

Der Kontaktschalter 18 innen an der Zahnstange 3 beendet den Vorlauf des Supports.

Der Kontaktschalter 15 links am Support 2 beendet den Vorlauf des Meßschlittens 1 nach Durchfahren eines Meßbereichs.

Weiterhin läßt ein nicht dargestellter Kontaktschalter im Teil 1B des Meßschlittens eine Messung nicht zu, wenn die Schutzhülle 14 der Tastfühler nicht über diesen Kontaktschalter einen Stromkreis schließt und damit anzeigt, daß die Tastfühler freigegeben sind. Ein weiterer, nicht dargestellter Kontaktschalter im Teil 1a des Meßschlittens läßt ein Zurückschieben des Meßschlittens nicht zu, wenn die Schutzhülle 14 der Tastfühler über diesen Kontaktschalter einen Stromkreis nicht schließt und damit anzeigt, daß die Tastfühler von der Schutzhülle abgeschirmt sind.

Vor jeder Messung erfolgt ein selbsttätiger Abgleich aller Dehnungsmeßstreifen, mit dem der Rechner die Messung auswertet. Dabei hält er eine Gerade zwischen den äußersten Punkten des Tastfühlers in ein- und ausgeschwenkten Zustand fest. Nach der Messung erfolgt ein selbsttätiger Kontrollabgleich in der gleichen Weise. Dabei werden alle Messungen mit abweichender Aussage, z.B. hervorgerufen durch einen abgebrochenen Bügel 25, annulliert. Ein gesonderter Abgleich eines Dehnungsmeßstreifens eines neuen Bügels ist daher nicht erforderlich.

In dem zu messenden Rohr 23 ist über die mit Abstand voneinander angeordneten Bürstensätze, bestehend aus den Bürstenkränzen 35, 36, 37 die Schutzhülse 30 zentriert gelagert. An der Stirnwand 38 der Innenhülse 31 ist einerseits das Federblech 9, an dem punkförmig das Federblech 46 anliegt, befestigt. Auf dem Federblech 46 befinden sich Dehnmeßstreifen 45, an denen Zulietungen angedeutet sind. Mit 47 sind Auswaschungen oder Erosionsfurchen angedeutet.

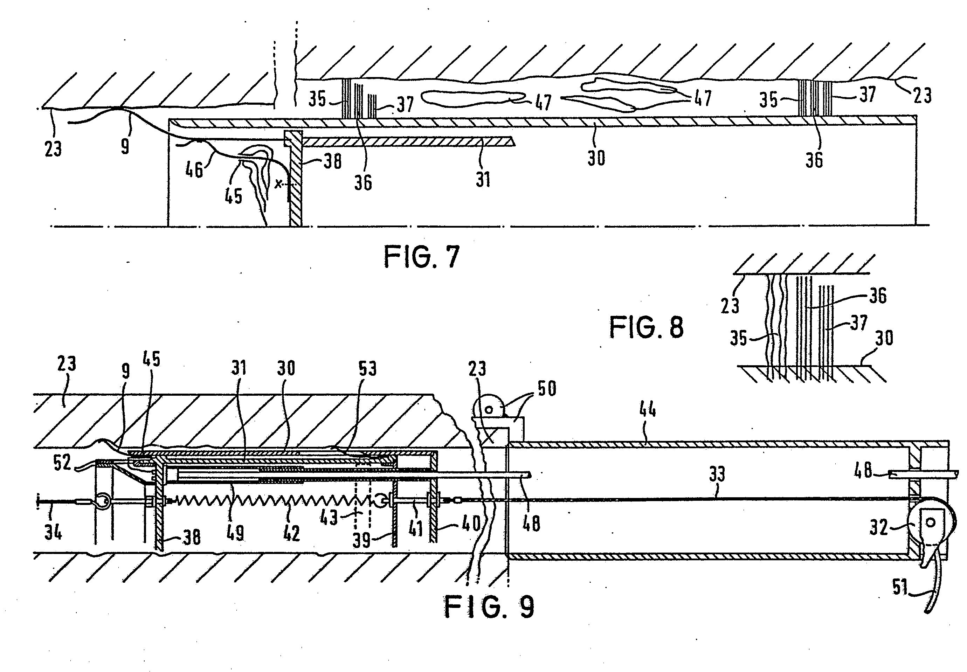

Fig. 8 zeigt, daß der aus z.B. Stahlfedern bestehende Bürstenkranz 35 die Lagerung übernimmt.

Figur 9 zeigt von den etwa 100 am Umfang der Innenhülse 38 angeordneten Federblechen das Federblech 9 mit Dehnmeßstreifen 45. Die Innenhülse hat eine hintere Stirnwand 38 und eine vordere Stirnwand 39. Sie ist gleitbar in der Schutzhülse 30 geführt, die eine vordere Stirnwand 40 hat. Mit der Mündung des Geschützrohres 23 ist vorn, also rechts in der Zeichnung, mit der Klemmvorrichtung 50 das Startrohr 44 verbunden. Rechts außen am Startrohr befindet sich der Drehfeldmotor mit Seiltrommel, der über das Seil 33 mit dem Bolzen 41 verbunden ist. Ein nicht dargestellter entsprechender Drehfeldmotor ist an der anderen Seite mit dem Seil 34 verbunden. Dieses Seil 34 ist mit der Stirnwand 38 der Innenhülse 31 verbunden. Diese Stirnwand 38 ist wiederum über die Zugfeder 42 mit dem durch die hintere Stirnwand 39 ragenden Bolzen 41 verbunden. Beim Meßvorgang, also beim Vorziehen des Seiles 33 nach rechts, ist die Zugkraft des Seiles 34 so eingestellt, daß die Innenhülse mit dem Tastelement 9 selbsttätig aus der Schutzhülse herausgefahren wird. Am Schluß der Messung zieht die Zugfeder 42 die Innenhülse wieder in das Schutzrohr 49 ein. Die Leitungen von den Dehnmeßstreifen 45 sind durch einen zwischen Ringplatten 52 gebildeten Kanal durch ein Schutzrohr 49 zu einem Meßkabel 48 geführt, das rechts außen durch eine Stirnwand des Startrohres nach außen geführt ist. Mit 43 ist die Schaltlibelle zur Anzeige der Lage der Innenhülse 31 angedeutet. Mit 53 ist eine Federanordnung angedeutet, die anstelle der Zentriereinrichtung nach Figur 8 eingesetzt sein könnte. Mit 51 ist das Motorkabel zur Stromzuführung zum Drehfeldmotor 32 angedeutet.

5

**0 033 378**

Bezugszeichenliste

| | | | | |
|---|---|---|---|---|
| 1 | Meßschlitten | 24 | Paßring |
| 1a | längsverschiebbarer und drehbarer Teil des Meßschlittens | 25 | Bügel |
| | | 26 | Meß- und Steuerkabel |
| 1b | längsverschiebbarer Teil des Meß- schlittens | 27 | Trommel des Meßschlittens |
| | | 28 | Spannbackenantrieb |
| 2 | Support | 29 | Steuerkabel |
| 3 | Zahnstange | 30 | Schutzhülse |
| 4 | Kugelbüchse | 31 | Innenhülse |
| 5 | Spannbacke des Meßschlittens | 32 | Drehfeldmotor m.Seiltrommel |
| 6 | Spannbacke des Supports | 33, 34 | Seile |
| 7 | Tastfühler | 35, 36, 37 | Bürstenkränze |
| 8 | Verbindungsstift | 38 | hintere Stirnwand der Innenhülse |
| 9 | Federblech | 39 | vordere Stirnwand der Innenhülse |
| 10 | Bolzen der Spannbacke | 40 | vordere Stirnwand der Schutzhülse |
| 11 | Kugelkörper | 41 | Bolzen |
| 12 | Kegel | 42 | Zugfeder |
| 13 | Hubstange | 43 | Schaltlibelle |
| 14 | Schutzhülle für Tastfühler | 44 | Startohr |
| 15 | Kontaktschalter | 45 | Dehnmeßstreifen |
| 16 | Transportritzel | 46 | Federblech |
| 17 | Getriebe | 47 | Rohrauswaschung |
| 18 | Kontaktschalter an Zahnstange | 48 | Meßkabel |
| 19 | Schrittantrieb (Motor) | 49 | Schutzrohr |
| 20 | Drehantrieb (Motor) | 50 | Klemmvorrichtung |
| 21 | Kontaktschalter an Zahnstange | 51 | Motorkabel |
| 22 | Kontaktschalter am Support | 52 | Ringplatte |
| 23 | zu messendes Rohr | 53 | Federanordnung zur Lagerung |

**Patentansprüche**

1. Rohrinnendurchmessermeßgerät bestehend aus einem mit Paßteilen gleitbar an der Rohrinnenwand des zu messenden Rohres anliegenden Meßschlitten, der über eine mit einem Antrieb verbundenes Teil in Längsrichtung des Rohres verschiebbar ist und der beim Meßvorgang über seine Außenwand hinausragende, mit ihrem freien Ende federnd an der Innenwand des Rohres anliegende Tastfühler aufweist, von denen Meßwerte auf einen Meßwertgeber übertragbar sind, dadurch gekennzeichnet, daß die Tastfühler (7, 9, 25, 46) in einer Vielzahl von etwa 90 bis 100 Stück im Bereich des freien Endes einer zylindrischen Trommel (27) oder einer Innenhülse (31) gleichmäßig über deren Umfang verteilt mit ihrem einen Ende so befestigt sind, daß sie nach dem Meßvorgang von einer Schutzhülse (14, 30) abdeckbar sind.

2. Gerät nach Anspruch 1, gekennzeichnet durch die Merkmale:

a) der Meßschlitten (1) liegt mit als Paßringen (24) ausgebildeten Paßteilen an der Innenwand des zu messenden Rohres (23);

b) der Meßschlitten (1) ist mit Spannbacken (5) in seiner Lage im Rohr festlegbar;

c) der Meßschlitten (1) weist ein um die Achse des Rohres (3) drehbares Teil (1a) auf, welches die Tastfühler trägt;

d) der Meßschlitten (2) weist einen nicht drehbaren Teil (1b) auf, der einen Drehantrieb (20) für das drehbare Teil (1a) enthält;

e) der Meßschlitten (1) ist über ein als Zahnstange (3) ausgebildetes Verbindungsteil mit einem mit Paßringen (24) axial gleitbar an der Innenwand des zu messenden Rohres (23) anliegendem, den Antrieb enthaltenden Support (2) verbunden;

f) der Support (2) ist mit Spannbacken (6) in seiner Lage im Rohr (23) festlegbar;

g) der Support (2) weist als Antrieb einen Schrittmotor (19) auf, der über ein Getriebe (17) mit Transportritzel (16) derart mit der Zahnstange (3) in Antriebsverbindung steht, daß bei angezogenen Spannbacken (5) des Meßschlittens (1) und gelösten Spannbacken (6) des Supports (2), der Support (2) vom Schrittmotor (19) in Längsrichtung des Rohres (23) hin oder her bewegbar ist bzw. bei angezogenen Spannbacken (6) des Supports (2) und gelösten Spannbacken (5) des Meßschlittens (1), der Meßschlitten (1) in Längsrichtung des Rohres (23) hin oder her bewegbar ist.

3. Gerät nach Anspruch 1 oder 2, dadurch gekennzeichnet, daß die Schutzhülse (14) mittels Hubantrieb über die Tastfühler (7) schiebbar ist.

4. Gerät nach einem der Ansprüche 1 bis 3, dadurch gekennzeichnet, daß die Spannbacken (5 bzw. 6) von im Meßschlitten (1) bzw. Support (2) radial nach innen ragenden, unter nach innen

6

gerichtetem Federdruck stehenden Bolzen (10) gehalten sind, deren inneres freies Ende auf einem axial in Längsrichtung von Meßschlitten bzw. Support verschiebbaren, an einem Kugelkörper (11) gehaltenen Kegel (12) anliegen, der durch eine Hubstange (13) in seiner Lage gehalten ist (Fig. 2, 3).

5. Gerät nach einem der Ansprüche 1 bis 3, gekennzeichnet durch in Längsschlitzen der Trommel (27) des drehbaren Teiles (1a) des Meßschlittens (1), einseitig schwenkbar gelagerte Bügel (25) als Tastfühler (7), von denen jeder nach auußen in einen Taststift ausläuft und an der Rückseite durch einen gleitbar geführten Verbindungsstift (8) mit einem mit Dehnungsmeßstreifen ausgerüsteten Federblech (9) verbunden ist (Fig. 4 bis 6).

6. Gerät nach Anspruch 1, dadurch gekennzeichnet, daß der Meßschlitten als Paßteil eine Zentriereinrichtung (35—37) aufweist, daß der Meßschlitten aus der die Zentriereinrichtung tragenden Schutzhülse (30) und der in der Schutzhülse (30) nahezu spielfrei längsverschieblich geführten, die Tastfühler (9, 46) tragenden Innenhülse (31) besteht, und daß ein von einem Drehfeldmotor am hinteren Rohrende als Teil des Antriebs kommendes Seil (34) mit einer hinteren Stirnwand (38) der Innenhülse (31) verbunden ist, während ein von einem weiteren Drehfeldmotor (32) am vorderen Ende des Rohres als weiteres Teil des Antriebs (23) kommendes Seil (33) an einem in einer vorderen Stirnwand (40) der Schutzhülle (30) befestigten als Bolzen (41) ausgebildetes Verbindungsteil verbunden ist, der gleitbar durch eine vordere Stirnwand (39) der Innenhülse (31) geführt ist, und durch eine Zugfeder (42) zwischen dem durch die vordere Stirnwand (39) der Innenhülse (31) ragenden Bolzen (41) und der hinteren Stirnwand (35) der Innenhülse (31).

7. Gerät nach Anspruch 6, dadurch gekennzeichnet, daß die Zentriereinrichtung aus mindestens zwei mit axialem Abstand voneinander außen im die Schutzhülse (30) in Umfangsrichtung ununterbrochen oder unterbrochen angebrachten Bürstensätzen aus mindestens je drei Bürstenkränzen (35, 36, 37) mit abgestuft unterschiedlichen Außendurchmessern, deren geringster kleiner und alle übrigen größer als der Kaliberdurchmesser des zu messenden Rohres (23) und deren Stufenhöhe kleiner als die Meßtiefentoleranz ist, besteht.

8. Gerät nach einem der Ansprüche 6 oder 7, gekennzeichnet durch Anordnung einer Schaltlibelle (43) an der Innenhülse (31) zur Weiterleitung eines Signals zur Anzeige der Vertikalen in einem dem Meßwertgeber nachgeordneten Registriergerät.

9. Gerät nach einem der Ansprüche 6 bis 8, dadurch gekennzeichnet, daß als Tastfühler ein mit Dehnungsmeßstreifen (45) ausgerüstetes Federblech (9) dient.

10. Gerät nach Anspruch 9, dadurch gekennzeichnet, daß an der Hinterseite des Federbleches (9) punktförmig das freie Ende eines weiteren, ebenfalls an seinem anderen Ende an der Innenhülse, z.B. an deren Stirnwand (38) festen, mit Dehnmeßstreifen (45) ausgerüsteten Federbleches (46) anliegt.

11. Gerät nach Anspruch 9 oder 10, gekennzeichnet durch unter einem Winkel zur Längsachse auf dem Federblech (46) angeordnete Dehnmeßstreifen (45).

## Revendications

1. Appareil de mesure du diamètre interne d'un tube, comprenant un chariot de mesure placé de façon à pouvoir glisser avec des éléments d'ajustage au contact de la paroi intérieure du tube à mesurer, pouvant être déplacé dans la direction longitudinale du tube grâce à une partie reliée à un mécanisme d'entraînement, et comportant un palpeur dépassant de sa paroi extérieure lors du processus de mesure, contactant élastiquement la paroi intérieure du tube par son extrémité libre, dont les valeurs de mesure peuvent être transmises à un indicateur de mesure, caractérisé en ce que les palpeurs (7, 9, 25, 46) en un grand nombre d'environ 90 à 100 pièces, sont fixés par l'une de leurs extrémités, dans la zone de l'extrémité libre d'un tambour cylindrique (27) ou d'un manchon intérieur (31) avec répartition uniforme à sa périphérie, de façon à pouvoir être recouverts par un manchon de protection (14, 30) après le processus de mesure.

2. Appareil de mesure selon la revendication 1, caractérisé en ce que:

a) Le chariot de mesure (1) est au contact de la paroi intérieure du tube à mesurer (23) par des éléments d'ajustage conformés en bagues d'ajustage (24);

b) le chariot de mesure (1) peut être fixé en position dans le tube au moyen de mâchoires de serrage (5);

c) le chariot de mesure (1) comporte une partie (1a) pouvant tourner autour de l'axe du tube (3) qui porte le palpeur;

d) le charoit de mesure (1) comparte une partie (1b) non rotative qui contient un mécanisme (20) d'entraînement en rotation de la partie rotative (1a);

e) le chariot de mesure (1) est relié par un élément de liaison conformé en crémaillère (3) à un support (2) contenant le mécanisme d'entraînement, contactant par des bagues d'ajustage (24) de façon à pouvoir glisser axialement, la paroi intérieure du tube (23) à mesurer;

f) le support (2) peut être fixé en position dans le tube (23) au moyen de mâchoires der serrage (6);

g) le support (2) comporte comme mécanisme d'entraînement, un moteur pas à pas (19) qui est relié cinématiquement par une transmission (17) comportant des pignons de transport (16) à la crémaillère (3) de telle façon que, lorsque les mâchoires de serrage (5) du chariot de mesure (1)

**0 033 378**

sont serrées et que les mâchoires de serrage (6) du support (2) sont desserrées, le support (2) puisse effectuer sous l'action du moteur pas à pas (19) dans la direction de la longueur du tube (23) des mouvements de va-et-vient, et respectivement, lorsque les mâchoires de serrage (6) du support (2) sont serrées et que les mâchoires de serrage (5) du chariot de mesure (1) sont desserrées, le chariot de mesure (1) puisse effectuer des mouvements de va-et-vient dans la direction de la longueur du tube (23).

3. Appareil selon la revendication 1 ou 2, caractérisé en ce que le manchon de protection (14) peut être amené par des moyens de relevage au-dessus des palpeurs (7).

4. Appareil selon l'une quelconque des revendications 1 à 3, caractérisé en ce que les mâchoires de serrage (5) respectivement (6) sont retenues par des chevilles (10) dirigées radialement vers l'intérieur dans le chariot de mesure (1), respectivement le support (2), soumises à une pression élastique dirigée vers l'intérieur, dont les extrémités libres intérieures sont en contact avec un cône (12) maintenu contre un corps sphérique (11), mobile axialement dans la direction de la longueur du chariot de mesure, respectivement du support, qui est maintenu en position par une tige élévatrice (13).

5. Appareil selon l'une des revendications 1 à 3, caractérisé par des étriers (25) montés de façon à pouvoir pivoter longitudinalement dans des fentes longitudinales du tambour (27) de la partie rotative (1a) du chariot de mesure (1) constituant un palpeur de mesure (7), dont chacun prend vers l'extérieur la forme d'une tige de palpeur, et est relié à l'arrière, par une tige de liaison (8) coulissante à une tôle élastique (9) pourvue de bandes de mesure extensibles.

6. Appareil selon la revendication 1, caractérisé en ce que le chariot de mesure comporte, comme élément d'ajustage, un dispositif de centrage (35—37), en ce que le chariot de mesure comprend un manchon protecteur (30) portant le dispositif de centrage et le manchon intérieur (31) pouvant coulisser longitudinalement presque sans jeu dans le manchon protecteur (30), portant les palpeurs (9, 46), et en ce qu'un câble (34) provenant d'un moteur à champ tournant situé à l'extrémité postérieure du tube et faisant partie du mécanisme. d'entraînement est relié à une paroi frontale postérieure (38) du manchon intérieur (31), tandis qu'un câble (33) provenant d'un autre moteur à champ tournant (32) situé à l'extrémité antérieure du tube et faisant également partie du mécanisme d'entraînement (23) est relié à un élément de liaison conformé en boulon (41), fixé dans une paroi frontale antérieure (40) du manchon protecteur (30), qui est guidé de façon à pouvoir coulisser par une paroi frontale antérieure (39) du manchon intérieur (31), et par un ressort de traction (42) entre le boulon (41) traversant la paroi frontale antérieure (39) du manchon intérieur (31) et la paroi frontale postérieure (35) du manchon intérieur (31).

7. Appareil selon la revendication 6, caractérisé en ce que le dispositif de centrage comprend au moins deux jeux de balais disposés à une certaine distance axiale l'un de l'autre autour du manchon protecteur (30) sans interruption ou avec interruption en direction périphérique, comprenant chacun au moins trois couronnes de balais (35, 36, 37) à diamètres extérieurs différents étagés, dont le plus petit est inférieur et tous les autres sont supérieurs au calibre du tube (23) à mesurer, et dont la hauteur d'étagement est inférieure à la tolérance de mesure en profondeur.

8. Appareil selon la revendication 6 ou 7, caractérisé par la présence d'un niveau de manoeuvre (43) sur le manchon intérieur (31) pour transmettre un signal indiquant la verticale dans un appareil d'enregistrement placé à la suite de l'indicateur de valeurs de mesure.

9. Appareil selon l'une des revendications 6 à 8, caractérisé en ce que le palpeur est constitué par une tôle élastique (9) pourvue de bandes de mesure extensibles (45).

10. Appareil selon la revendication 9, charactérisé en ce que l'extrémité libre d'une autre tôle élastique (46) pourvue de bandes de mesure extensibles (45), également fixée à son autre extrémité au manchon intérieur, par exemple à sa paroi frontale (38), est en contact ponctuel avec la face postérieure de la tôle élastique (9).

11. Appareil selon la revendication 9 ou 10, caractérisé par des bandes de mesure extensibles (45) placées obliquement par rapport à l'axe longitudinal sur la tôle élastique (46).

**Claims**

1. Apparatus for measuring the internal diameter of a tube comprising a measuring slide with fitting pieces which bear slidably against the internal wall of the tube to be measured, the slide being displaceable in the longitudinal direction of the tube by a part connected with a drive and which during the measurement has probes of which the free ends resiliently bear against the internal wall of the tube and from which measurements are transmissible to a measurement pick-up, characterised by the fact that a multiplicity of about 90 to 100 probes (7, 9, 25, 46) are each secured at one end in the region of the free end of a cylindrical drum (27) or internal sleeve (31) and are evenly distributed over the periphery thereof in such a way that after the measurement they can be covered by a protective casing (14, 30).

2. Apparatus in accordance with Claim 1, characterised by the following features:

(a) the measuring slide (1) has fitting pieces constructed as slip rings (24) which bear against the internal wall of the tube (23) to be measured;

8

(b) the measuring slide (1) can be held in position in the tube by means of clamping jaws (5);

(c) the measuring slide (1) has a part (1a) which is rotatable about the axis of the tube (3) and which carries the probes;

(d) the measuring slide (1) has a non-rotatable part (1b) which contains a rotary drive (20) for the rotatable part (1a).

(e) the measuring slide (1) has a connecting part in the form of a rack (3) which connects the slide to a support (2) which is axially movable by means of slip rings (24) against the internal wall of the tube (23) to be measured and which contains the drive;

(f) the support (2) can be fixed in position in the tube (23) by means of clamp jaws (6);

(g) the support (2) has a drive device comprising a stepping motor (19) which is coupled by a gearing (17) with a drive pinion (16) to move the rack (3) in such a way that when the clamp jaws (5) of the measuring slide (1) are closed tight and the clamp jaws (6) of the support (2) are released the support (2) is movable to and fro by the stepping motor (19) in the longitudinal direction of the tube (23), and when the clamp jaws (6) of the support (2) are closed and the clamp jaws (5) of the measuring slide (1) are released the measuring slide (1) is movable to and fro in the longitudinal direction of the tube (23).

3. Apparatus in accordance with Claim 1 or 2, characterised by the fact that the protective casing (14) can be pushed over the probe (7) by means of a drive.

4. Apparatus in accordance with any one of Claims 1 to 3, characterised by the fact that the clamp jaws (5, 6) are held by bolts (10) which extend radially inwards from the measuring slide (1) or support (2) respectively and which are subject to spring pressure directed inwards, the inner free end of the bolts bearing on a cone (12) which is displaceable axially in the longitudinal direction from the measuring slide or support respectively and retained by a spherical body (11) held in position by a push rod (13) (Figures 2, 3).

5. Apparatus in accordance with any one of Claims 1 to 3, characterised by bow arms (25) which are mounted in a unilaterally pivotable manner in longitudinal slits of drum (27) of the rotatable part (1a) of the measuring slide (1) and which act as probes (7), each arm terminating to the outside in a probe pin and connected at the rear by a slidably guided connecting pin (8) with a leaf spring (9) equipped with strain transducers (Figures 4—6).

6. Apparatus in accordance with Claim 1, characterised by the fact that the measuring slide, as a fitting piece, has a centering device (35—37), the measuring slide comprising the protective casing (30) carrying the centering device and the internal casing (31) guided in a longitudinally displaceable manner and substantially free of clearance in the protective casing and which carries the probes 9, 46, a cable (34) from a rotary field motor at the rear end of the tube forming part of the drive, being connected with a rear end wall (38) of the internal casing (31), a cable (33) coming from a further rotary field motor (32) at the front end of the pipe, forming a further part of the drive (23) being connected to a connecting part comprising bolt (41) which is secured to a front end wall (40) of the protective casing (30) and which is slidably guided by a front end wall (39) of the internal casing (31) and a draw spring 42 coupled between the bolt (41) extending through the front end wall (39) of the internal casing (31) and the rear end wall (35) of the internal casing (31).

7. Apparatus in accordance with Claim 6, characterised by the fact that the centering device comprises at least two sets of brushes arranged around the protective casing (30) at an axial distance from each other and either uninterrupted or interrupted in a peripheral direction and each having at least three rings of brushes (35, 36, 37) with graduated external diameters, the smallest one being smaller and all others greater than the calibre diameter of the tube (23) to be measured, and their stop height being smaller than the measuring depth tolerance.

8. Apparatus in accordance with Claim 6 or 7, characterised by the fact that a switching control is provided on the internal casing 31 for the purpose of transmitting a signal indicating the vertical to a recording instrument following the measurement pick-up.

9. Apparatus in accordance with any one of Claims 6 to 8, characterised by the fact that the probe comprises a leaf spring (9) equipped with strain transducers (45).

10. Apparatus in accordance with Claim 9, characterised by the fact that the free end of a further leaf spring (46) also secured by its other end to the internal casing, for example to the end wall (38) of the latter, and equipped with strain transducers (45), bears at separate points against the rear of the leaf spring (9).

11. Apparatus in accordance with Claim 9 or 10, characterised by strain transducers (45) positioned on the leaf spring (46) and at an angle with respect to the longitudinal axis.

9

**FIG. 1**

FIG. 2

FIG. 3

FIG. 4

FIG. 5

FIG. 6

FIG. 7

FIG. 8

FIG. 9